# EUROPEAN PATENT SPECIFICATION

(11) **EP 3 752 709 B1**
(45) Date of publication and mention of the grant of the patent: **23.08.2023**
(21) Application number: 19707310.9
(22) Date of filing: 15.02.2019
(51) Int. Cl.: E21B 33/06, E21B 33/064, F16H 3/54, F16K 3/02, F16K 31/04

(54) **AN IMPROVED SUBSEA ELECTRIC ACTUATOR**
VERBESSERTER ELEKTRISCHER UNTERWASSERAKTUATOR
ACTIONNEUR ÉLECTRIQUE SOUS-MARIN AMÉLIORÉ

(30) Priority: 16.02.2018 GB 201802584
(43) Date of publication of application: 23.12.2020
(73) Proprietor: Aker Solutions AS, 1325 Lysaker (NO)
(72) Inventor: MORGAN, Guy, 1389 Heggedal (NO); HALDORSEN, Henrik, 1389 Heggedal (NO); MOEN, Stig, 1358 Jar (NO); WINTHER-LARSSEN, Einar, 1061 Oslo (NO)
(74) Representative: HGF
(86) International application number: PCT/EP2019/053880
(87) International publication number: WO 2019/158723

(56) References cited:
- WO-A1-2014/123425
- WO-A1-2014/204451
- WO-A1-2017/138816
- US-A1- 2004 031 940
- US-A1- 2006 006 355
- US-A1- 2014 033 842
- US-A1- 2014 069 531
- US-A1- 2015 008 000
- E. WINTHER-LARSSEN ET AL: "All-Electric as an Enabler for More Cost Effective Developments on Cluster Systems", OTC-27659-MS, 1 May 2017 (2017-05-01), pages 1-15, XP055584391, DOI: 10.4043/27659-MS ISBN: 978-1-61399-512-9

## Description

The present invention relates to an improved subsea electric actuator and in particular an actuator for use with a subsea gate valve.

Subsea actuators may comprise, for example, electrical motors or hydraulic motors. WO2014204451A1 discloses an example blow-out preventer with a hydraulic actuator. Subsea actuators with electrical motors traditionally output high speeds and low torques and employ a fixed gearing to increase the torque. The trend in the industry to date has been to increase the motor size and/or power to meet the higher torque and speed requirements of modern applications.

These actuators are generally satisfactory but the present inventors have noticed that improvements can be made. For example, motors with a large operational window tend to consume a lot of power, may be expensive, and may be large.

According to a first aspect of the present invention, there is provided a subsea electric actuator according to the appended claims.

The gearbox may comprise a planet and sun "planetary gearbox" thus comprising an outer ring gear normally with inwardly extending teeth, a central "sun gear" normally with outwardly extending teeth, and at least one "planet" gear between the ring gear and central sun gear normally with outwardly extending teeth. Usually, the planet gear's teeth mesh with both the sun gear's teeth and the outer ring gear's teeth. There may be any number of planet gears, such as between one and five, optionally two to four. A planet gear carrier and sun gear carrier are normally provided.

The switching mechanism may be manual or automatic. It may be controlled by suitable electronics. It may comprise a first sun gear lock, for locking the sun gear in a fixed position. The sun gear lock may comprise a brake. For example, the brake may be applied to a sun gear carrier. The switching mechanism and/or gear ratio selection is preferably electrically controlled. The output from the gearbox normally has two different selectable torques.

The switching mechanism may also comprise a second lock for locking the sun gear to the at least one planet gear. The lock for locking the sun gear to the at least one planet gear may comprise a clutch.

The powered down state of the actuator may be to lock the sun gear in position. This can assist in resisting any back-drive.

A number of different ratios can be provided by use of a planetary gearbox. For example, the input to the gearbox may drive the outer ring gear, and the output from the gearbox may be connected to the at least one planet gear. The output may be connected via the planet gear carrier.

The first gearing ratio may be in the range of between 200:1 to 400:1. The second gearing ratio may be in the range of 1:1 to 100:1.

The invention also provides an apparatus to close a bore comprising a valve and the subsea actuator described herein, the valve being controlled by the actuator.

The apparatus normally comprises a mechanism to convert rotational drive from the gearbox to linear drive for the valve.

The apparatus may comprise a second subsea actuator, especially when the valve is a gate valve. The gate valve is preferably controllable using the first and second subsea actuators to move into a closed position such that any wellbore obstruction is sheared, and also typically such that a wellbore is sealed. The wellbore obstruction may be a tubular, or it may be a line, such as a wireline or a slickline, for example.

The gate valve is normally moved into the closed position by moving a pair of rams outwardly with respect to each other.

Described is a method of using the actuator described herein subsea, especially to control production from a well.

Embodiments of the invention will now be described by way of example only and with reference to the accompanying drawings, in which:
Fig. 1 is a schematic diagram of a geared subsea valve actuator according to the present invention;
Fig. 2 is a representative graph of the torque required for operating a subsea valve against time;
Fig. 3 is a schematic diagram of a planetary gear system used in the gearbox of the

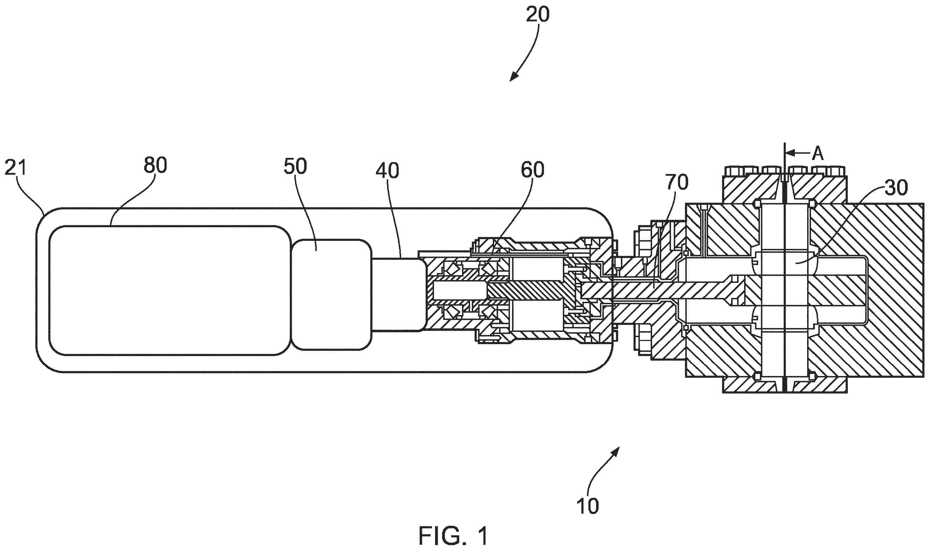

Fig. 1 valve actuator; and

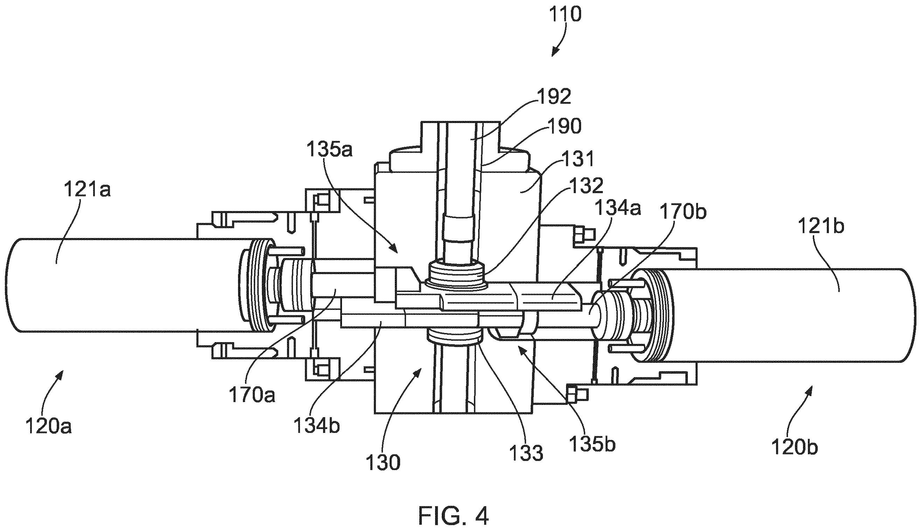

Fig. 4 is a schematic diagram of a further embodiment of the invention including a shear and seal gate valve system comprising two of the geared subsea valve actuators.

Fig. 1 shows an all-electric subsea actuator system 20 which is part of a valve operating system 10 for a subsea gate valve 30 with a failsafe function. The actuator system 20 is housed by an actuator housing 21 and comprises a two-speed gearbox 40. The higher torque gear ratio has a relatively high torque and low speed output. The lower torque gear ratio has a relatively high speed and low torque output. The first part of the valve closing sequence can be run at high speed using the lower torque gear ratio, and the gear ratio is shifted for the second part of the stroke, increasing the torque. A motor 50 is controlled by a control and electronics module 80. If any part of the valve operating system 10 was to fail, for example if a battery in the control and electronics module 80 powering the system ran dry, the failsafe function is configured such that the higher torque gear ratio is selected by default to restrict any change in position of the valve 30 without the use of electrical power.

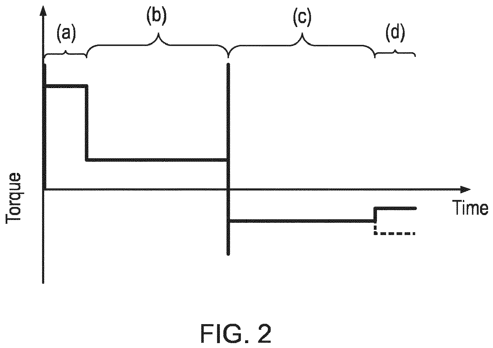

Fig. 2 shows a typical torque signature plotted against time for the subsea gate valve 30 in its various valve positions, i.e. across the full stroke of the valve 30. The direction and torque of the load required from the actuator system 20 is dependent on many factors.

Exemplary values of these influencing factors are given below. The typical environmental parameters are a water depth of up to 4000 m, a temperature of between -4 °C and 66 °C, and a bore pressure of between 0 Pa (0 psi) and at least 10300 kPa (15 000 psi). There is a large variance in the friction of moving components in the valve operating system 10, and there is a large span of load required to operate the valve 30. The load required to open the valve 30 is very different from that required to close the valve 30.

To change the position of the valve 30 from an initial closed position to an open position, a high torque is required to be supplied by the actuator system 20. This stage is known as 'cracking open' and is illustrated in section (a) of the graph in Fig. 2. For this stage, the higher torque gear ratio is selected. This stage requires the highest load from the actuator, and the gearbox 40 is specified from this load. This stage forms around 10% - 15% of the full valve stroke.

The next stage of the valve stroke is known as `running open', and is shown in part (b) of the Fig. 2 graph, which is followed by stage (c), `running closed'. The gearbox 40 is used to select the second, higher speed gear ratio for operating the valve in these stages.

The final stage of the valve stroke is shown in stage (d), of Fig. 2, which is known as 'pinch closed'. The torque required for stage (d) can be larger or smaller than the torque required for stage (c), depending on the bore pressure and water depth. To fully close the valve in this example, where the torque required for stage (d) is greater than that required in stage (c), the gearbox 40 selects the higher torque gear ratio. The gearbox 40 remains with this higher torque gear ratio until controlled by the control and electronics module 80 to move to the lower torque gear ratio.

A sufficiently high value of torque can be retained in the lower torque gear such that the valve 30 position is moveable in a controlled way. The torque values further depend on the size and pitch of a screw, and the bearing arrangement for the actuator system 20, and may increase due to operational margins.

The electrical power provided for the lower torque gear in this example is 50 W, which assists in producing a high-speed output, although more power is consumed for the process of shifting into this gear.

The gear system is loaded during gear change such that the input and output of the gearbox 40 are connected to the gear system when the gear ratio is changed.

To prevent possible back-driving, a brake is engaged in the form of default selection of the higher torque gear. The default selection of higher torque gear automatically secures the position of the valve 30 preventing it from undesired movement into a different position. When the lower torque gear is selected, the brake effectively disengages. Additional friction present in the gearbox 40 and motor 50 further hinders back-driving. Therefore, back-drive may be substantially reduced and/or prevented.

The force of the brake is variable depending on where in the gear system the physical brake mechanism is placed.

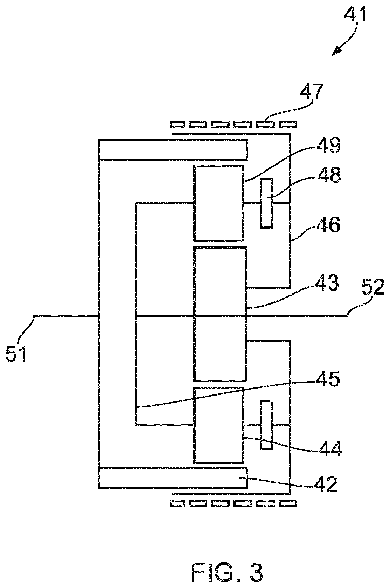

Fig. 3 shows a single-stage planetary gear system 41 which is disposed within the gearbox 40 of Fig. 1, and which comprises a ring gear 42, a sun gear 43 carried by a sun gear carrier 46, and three planet gears 44 and 49 (two of which are shown in Fig. 3) which are carried by a planet gear carrier 45. The sun gear carrier 46 is directly attached to a sun gear brake 47, the default position of which is the braking position such that movement of the sun gear is prevented by default. The sun gear brake 47 can be released when electrical power is supplied, allowing the sun gear 43 to rotate around its central axis.

The failsafe position of the actuator system 20 is produced because if electrical power to the gearbox 40 is lost at any time, the sun gear brake 47 is automatically applied which effectively selects the higher torque gear ratio. The higher torque gear ratio prevents the valve 30 from changing position until it is controlled to be moved into a different position by the control and electronics module 80.

The input from the motor 50 to the gearbox 40 is applied to the ring gear 42 such that the input shaft 51 is coupled to the ring gear 42. The output from the gearbox 40 is supplied from the planet gear carrier 45, such that the output shaft 52 is coupled to the planet gear carrier 45. Different components of the planetary gear system 41 are engaged/disengaged with one another to result in different gear ratios.

In the higher torque gear ratio, the input shaft 51 is configured to drive the ring gear 42, which is configured to interact with the planet gears 44, 49. Rotation of the ring gear 42 is configured to drive the planet gears 44, 49 to rotate around their own axes, and also to rotate around the sun gear 43 which is held stationary by the brake 47.

Rotation of the planet gears 44, 49 around the sun gear 43 is configured to cause the planet carrier 46 to rotate, but at a reduced speed and with an increased torque in comparison to the input load on the ring gear 42. Thus, in the higher torque gear ratio, the gear ratio between the input shaft 51 and the output shaft 52 results in a reduced speed and an increased torque.

To alter the gear ratio a clutch 48 is engageable to lock the sun gear 43 to the planet gears 44, 49, to force the sun gear carrier 46 and the planet gear carrier 45 to turn together, and at the same speed. At the same time, the brake 47 for the sun gear 43 is configured to be released.

This results in the lower torque gear ratio, in which the sun gear 43 is locked to the planet carrier 45 using the clutch 48, and wherein the sun gear 43, the planet carrier 45 and the ring gear 42 are configured to rotate with the same speed. The ring gear 42 and the input shaft 51 will rotate at the same speed as the output shaft 52 giving a gear ratio of 1:1. In comparison with the higher torque gear ratio, the output speed is greater, and the output torque is reduced.

With reference to Fig. 1, the actuator system 20 transfers the torque from the motor 50 and the gearbox 40 to the screw. The system includes a means of transforming the rotational output movement from the gearbox 40 to linear movement of the screw, which in this example comprises a set of spur gears 60, although helical gears may also be used. The movement of the screw is in turn applied to a valve stem and bonnet 70 to move the valve 30 between open and closed positions. Only a single stage planetary gear set is used in this example i.e. one set of planetary gears comprising a ring gear, a sun gear, and a planet carrier.

A spur gear system 60 is provided to translate the rotational output movement from the planetary gear system 41 to the linear movement needed to drive the screw and control the position of the valve 30. The total gear ratio in the gear system is the combination of all the internal gear stages.

In use, the higher torque gear ratio is used to `crack open' the valve 30. To shift into the lower torque gear ratio, an electrical signal is applied which energises the sun gear brake 47 and releases sun gear 43. The actuator system 20 is then shifted into the lower torque gear ratio by changing the gear ratio of the planetary gear system 41, resulting in a higher-speed, lower-torque output.

It is later desired to close the valve 30 quickly whilst expending minimal energy. The first part of the closing stroke is performed when the actuator system 20 is still in the lower torque gear ratio. Then, it is shifted into the higher torque gear ratio for the last part of the closing stroke by reapplying the sun gear brake 47, providing a higher torque output for effectively closing the valve 30.

Motors with a large operational window typically consume a lot of power, are expensive, and may be large in size. For all-electric subsea systems where access to a power supply is restricted it can be advantageous to provide a low power electrical actuator. The two-speed gearbox of embodiments of the invention helps the actuator system 20 to apply a high load in certain situations, and a high speed in others, and so a smaller, less powerful motor can be used.

An advantage of certain embodiments is that ROVs are not required to close the valve, which can increase the reaction time in an emergency.

An alternative embodiment is shown in Fig. 4. Fig. 4 includes like parts with the earlier embodiment and these are not described again in detail. The reference numerals of the like parts share the same latter two digits in all embodiments, but differ in that they are prefixed with a '1' in the Fig. 4 embodiment.

In this embodiment, a valve operating system 110 is provided comprising two all-electric subsea actuator systems 120a, 120b within respective housings 121a, 121b, for actuating a subsea shear and seal gate valve 130. The shear and seal gate valve 130 can close a wellbore 190 in an emergency situation. It comprises a valve body 131 and two (upper and lower) shear rams 135a, 135b. The actuators 120a, 120b actuate the respective shear rams 135a, 135b to move between an open position and a closed position.

Each shear ram 135a, 135b has a cutting blade (not shown), a sealing gate 134a, 134b, and a rod portion 170a, 170b. The upper rod portion 170a is coupled to the first actuator 120a, and the lower rod portion 170b is coupled to the second actuator 120b.

The apparatus in Fig. 4 is shown in the open position, with rams 135a, 135b positioned in an open well bore 190 with a tubular 192 therein. To close the valve 130, the shear rams 135a, 135b are pulled outwardly with respect to each other by the actuators 120a, 120b so that the cutting blades shear the tubular 192. The rams 135a, 135b continue to travel until the lower gates 134a, 134b abut upper and lower seals 132, 133. This abutment provides metal-to-metal sealing between the gates 134a, 134b and the seals 132, 133, thus providing a metal-to-metal seal in two positions within the gate valve apparatus 130.

As in the earlier embodiment, each actuator 120a, 120b has a higher torque gear ratio, and a lower torque gear ratio. The first part of the gate valve 130 closing sequence involves shearing the tubular 192, and this is run at low speed using the higher torque gear ratio of each actuator 120a, 120b. The gear ratios are shifted for the second part of the closing stroke, increasing the gate valve 130 closing speed.

An advantage of such embodiments is that the two-speed gearbox in each actuator system 120a, 120b helps to apply a higher load for the shearing operation, and a higher speed when the higher load is not required. Smaller and lighter cutting blades can therefore be used.

In embodiments, the gear system consists of a greater number of gear stages. For example, the transmission system contains more than one stage of planetary gearbox i.e. more than one set of ring gear, sun gear, and planet gear carrier components. Alternatively, or in addition to several stages of planet gears, helical and/or spur gears and/or chain gears may also be provided in any combination.

In embodiments, the overall gear ratio of the system may be changed by bypassing and/or changing any one or several local ratios within the gear system. Any combination of gears in the planetary system may be connected to the input or the output shaft, and/or held stationary and/or locked to each other. For one embodiment, the higher torque gear ratio has a reduction of 270:1, and the lower torque position a reduction of 50:1.

The scope of protection of the current invention is defined by the appended claims.

## Claims

1. A subsea electric actuator (20, 120) comprising:
an electric motor (50),
a gearbox (40),
a drive connection from an output (51) of the motor to an input of the gearbox (40);
an output (52) from the gearbox (40),
a switching mechanism to switch the gearing ratio in the gearbox (40) from a first gearing ratio to a second different gearing ratio, such that the output from the gearbox (40) has two different selectable speeds.

2. A subsea electric actuator (20, 120) as claimed in claim 1, wherein the gearbox (40) comprises a planetary gearbox (41) thus comprising an outer ring gear (42), a central sun gear (43) and at least one planet gear (44, 49) between the ring gear and central sun gear.

3. A subsea electric actuator (20, 120) as claimed in claim 2, wherein there is between one and five planet gears (44, 49).

4. A subsea electric actuator (20, 120) as claimed in claim 2 or claim 3, wherein the switching mechanism comprises a sun gear lock (47) for locking the sun gear; and optionally wherein the sun gear lock comprises a brake (47) and is applied to a sun gear carrier (46).

5. A subsea electric actuator (20, 120) as claimed in claim 4, wherein the powered down state of the actuator (20, 120) is to lock the sun gear (43); and optionally wherein the lock for locking the sun gear to the at least one planet gear comprises a clutch (48).

6. A subsea electric actuator (20, 120) as claimed in any one of claims 2 to 5, wherein the switching mechanism comprises a lock (48) for locking the sun gear (43) to the at least one planet gear (44, 49).

7. A subsea electric actuator (20, 120) as claimed in any one of claims 2 to 6, wherein the input (51) to the gearbox drives the outer ring gear (42), and the output (52) from the gearbox is connected to the at least one planet gear (44, 49).

8. A subsea electric actuator (20, 120) as claimed in any one of claims 2 to 7, wherein the first gearing ratio is in the range of between 200:1 to 400:1; and/or wherein the second different gearing ratio is in the range of 1:1 to 100:1.

9. An apparatus to close a bore comprising the subsea actuator as claimed in any preceding claim, and a valve (30), the valve being controlled by the actuator.

10. An apparatus as claimed in claim 9, further comprising a control and electronics module (80) to control the electric motor (50) and the switching mechanism.

11. An apparatus as claimed in claim 10, wherein the control and electronics module is configured to:
control the electric motor (50) to move the valve (30) through a valve closing stroke from an open position to a closed position, and
control the switching mechanism to provide the first gearing ratio during an initial stage of the valve closing stroke and the second gearing ratio during a final stage of the valve closing stroke, wherein the second gearing ratio has a higher torque than the first gearing ratio.

12. An apparatus as claimed in any one of claims 9 to 11, comprising a mechanism (60) to convert rotational drive from the gearbox (40) to linear drive for moving the valve (30).

13. An apparatus as claimed in any one of claims 9 to 12, wherein the subsea actuator is a first subsea actuator (120a), the apparatus further comprising a second subsea actuator (120b) as claimed in any one of claims 1 to 8, and wherein the valve (30) is a gate valve controllable by the first and second actuators to move into a closed position; and wherein the gate valve (30) is moveable into the closed position by moving a pair of rams (135a, 135b) outwardly with respect to each other.

14. A method of subsea electric actuation using the subsea electric actuator (20, 120) as claimed in any one of claims 1 to 8 or the apparatus as claimed in any one of claims 9 to 13; the method comprising:
providing the subsea electric actuator (20, 120) subsea;
electrically powering the subsea electric actuator (20, 120); and
using the subsea electric actuator (20, 120) to control a valve (30) to control production from a well.

## Patentansprüche

1. Elektrischer Unterwasser-Aktuator (20, 120), umfassend:
einen Elektromotor (50);
ein Getriebe (40),
eine Antriebsverbindung von einem Ausgang (51) des Motors zu einem Eingang des Getriebes (40);
einen Ausgang (52) vom Getriebe (40),
einen Schaltmechanismus zum Umschalten des Übersetzungsverhältnisses im Getriebe (40) von einem ersten Übersetzungsverhältnis auf ein zweites anderes Übersetzungsverhältnis, so dass der Ausgang vom Getriebe (40) zwei verschiedene wählbare Drehzahlen aufweist.

2. Elektrischer Unterwasser-Aktuator (20, 120) nach Anspruch 1, wobei das Getriebe (40) ein Planetengetriebe (41) umfasst, das somit ein äußeres Hohlrad (42), ein zentrales Sonnenrad (43) und mindestens ein Planetenrad (44, 49) zwischen Hohlrad und zentralem Sonnenrad umfasst.

3. Elektrischer Unterwasser-Aktuator (20, 120) nach Anspruch 2, wobei zwischen einem und fünf Planetenrädern (44, 49) vorhanden sind.

4. Elektrischer Unterwasser-Aktuator (20, 120) nach Anspruch 2 oder Anspruch 3, wobei der
Schaltmechanismus eine Sonnenradsperre (47) zum Sperren des Sonnenrads umfasst; und optional wobei die Sonnenradsperre eine Bremse (47) umfasst und auf einen Sonnenradträger (46) angewendet wird.

5. Elektrischer Unterwasser-Aktuator (20, 120) nach Anspruch 4, wobei der abgeschaltete
Zustand des Aktuators (20, 120) dazu dient, das Sonnenrad (43) zu sperren; und optional wobei die Sperre zum Sperren des Sonnenrads mit dem mindestens einen Planetenrad eine Kupplung (48) umfasst.

6. Elektrischer Unterwasser-Aktuator (20, 120) nach einem der Ansprüche 2 bis 5, wobei der Schaltmechanismus eine Sperre (48) zum Sperren des Sonnenrads (43) mit dem mindestens einen Planetenrad (44, 49) umfasst.

7. Elektrischer Unterwasser-Aktuator (20, 120) nach einem der Ansprüche 2 bis 6, wobei der Eingang (51) in das Getriebe das äußere Hohlrad (42) antreibt und der Ausgang (52) aus dem Getriebe mit dem mindestens einen Planetenrad (44, 49) verbunden ist.

8. Elektrischer Unterwasser-Aktuator (20, 120) nach einem der Ansprüche 2 bis 7, wobei das erste Übersetzungsverhältnis im Bereich zwischen 200:1 und 400:1 liegt; und/oder wobei das zweite unterschiedliche Übersetzungsverhältnis im Bereich von 1:1 bis 100:1 liegt.

9. Vorrichtung zum Verschließen einer Bohrung, umfassend den Unterwasser-Aktuator nach einem der vorhergehenden Ansprüche und ein Ventil (30), wobei das Ventil durch den Aktuator gesteuert wird.

10. Vorrichtung nach Anspruch 9, ferner umfassend ein Steuer- und Elektronikmodul (80) zum Steuern des Elektromotors (50) und des Schaltmechanismus.

11. Vorrichtung nach Anspruch 10, wobei das Steuer- und Elektronikmodul konfiguriert ist zum:
Steuern des Elektromotors (50), um das Ventil (30) durch einen Ventilschließhub von einer offenen Position in eine geschlossene Position zu bewegen, und
Steuern des Schaltmechanismus, um das erste Übersetzungsverhältnis während einer Anfangsphase des Ventilschließhubs und das zweite Übersetzungsverhältnis während einer Endphase des Ventilschließhubs bereitzustellen, wobei das zweite Übersetzungsverhältnis ein höheres Drehmoment als das erste Übersetzungsverhältnis aufweist.

12. Vorrichtung nach einem der Ansprüche 9 bis 11, umfassend einen Mechanismus (60), um den Drehantrieb vom Getriebe (40) in einen Linearantrieb zum Bewegen des Ventils (30) umzuwandeln.

13. Vorrichtung nach einem der Ansprüche 9 bis 12, wobei der Unterwasser-Aktuator ein erster Unterwasser-Aktuator (120a) ist, wobei die Vorrichtung ferner einen zweiten Unterwasser-Aktuator (120b) nach einem der Ansprüche 1 bis 8 umfasst und wobei das Ventil (30) ein Absperrschieber ist, der durch den ersten und zweiten Aktuator so gesteuert werden kann, dass er sich in eine geschlossene Position bewegt; und wobei der Absperrschieber (30) in die geschlossene Position bewegt werden kann, indem ein Paar Stößel (135a, 135b) relativ zueinander nach außen bewegt werden.

14. Verfahren zur elektrischen Unterwasserbetätigung unter Verwendung des elektrischen Unterwasser-Aktuators (20, 120) nach einem der Ansprüche 1 bis 8 oder der Vorrichtung nach einem der Ansprüche 9 bis 13; wobei das Verfahren umfasst:
Bereitstellen des elektrischen Unterwasser-Aktuators (20, 120) unter Wasser;
elektrisches Antreiben des elektrischen Unterwasser-Aktuators (20, 120); und
Verwenden des elektrischen Unterwasser-Aktuators (20, 120), um ein Ventil (30) zu steuern, um die Förderung aus einem Bohrloch zu steuern.

## Revendications

1. Actionneur électrique sous-marin (20, 120) comprenant :
un moteur électrique (50),
une boîte de vitesses (40),
une connexion d'entraînement depuis une sortie (51) du moteur à une entrée de la boîte de vitesses (40) ;
une sortie (52) de la boîte de vitesses (40),
un mécanisme de commutation pour commuter le rapport de vitesse dans la boîte de vitesses (40) d'un premier rapport de vitesse à un second rapport de vitesse différent, de sorte que la sortie de la boîte de vitesses (40) comporte deux vitesses sélectionnables différentes.

2. Actionneur électrique sous-marin (20, 120) selon 1a revendication 1, dans lequel la boîte de vitesses (40) comprend une boîte de vitesses à trains planétaires (41) comprenant ainsi une couronne à denture extérieure (42), un planétaire central (43) et au moins un satellite (44, 49) entre la couronne à denture et le planétaire central.

3. Actionneur électrique sous-marin (20, 120) selon la revendication 2, dans lequel il y a entre un et cinq satellites (44, 49).

4. Actionneur électrique sous-marin (20, 120) selon la revendication 2 ou la revendication 3, dans lequel le mécanisme de commutation comprend un verrou de planétaire (47) pour verrouiller le planétaire ; et éventuellement dans lequel le verrou de planétaire comprend un frein (47) et est appliqué à un porte-planétaire (46).

5. Actionneur électrique sous-marin (20, 120) selon la revendication 4, dans lequel l'état ralenti de l'actionneur (20, 120) sert à verrouiller le planétaire (43) ; et facultativement dans lequel le verrou pour verrouiller le planétaire sur l'au moins un satellite comprend un embrayage (48).

6. Actionneur électrique sous-marin (20, 120) selon l'une quelconque des revendications 2 à 5, dans lequel le mécanisme de commutation comprend un verrou (48) pour verrouiller le planétaire (43) sur l'au moins un satellite (44, 49).

7. Actionneur électrique sous-marin (20, 120) selon l'une quelconque des revendications 2 à 6, dans lequel l'entrée (51) à la boîte de vitesses entraîne la couronne à denture extérieure (42), et la sortie (52) depuis la boîte de vitesses est connectée à l'au moins un satellite (44, 49).

8. Actionneur électrique sous-marin (20, 120) selon l'une quelconque des revendications 2 à 7, dans lequel le premier rapport de vitesse se situe dans la plage comprise entre 200:1 et 400:1 ; et/ou dans lequel le second rapport de vitesse différent se situe dans la plage de 1:1 à 100:1.

9. Appareil pour fermer un alésage comprenant l'actionneur sous-marin selon l'une quelconque des revendications précédentes, et une soupape (30), la soupape étant commandée par l'actionneur.

10. Appareil selon la revendication 9, comprenant en outre un module de commande et d'électronique (80) pour commander le moteur électrique (50) et le mécanisme de commutation.

11. Appareil selon la revendication 10, dans lequel le module de commande et d'électronique est configuré pour :
commander le moteur électrique (50) pour déplacer la soupape (30) sur une course de fermeture de soupape d'une position ouverte à une position fermée, et
commander le mécanisme de commutation pour fournir le premier rapport de vitesse pendant une étape initiale de la course de fermeture de soupape et le second rapport de vitesse pendant une étape finale de la course de fermeture de soupape, dans lequel le second rapport de vitesse comporte un couple plus élevé que le premier rapport de vitesse.

12. Appareil selon l'une quelconque des revendications 9 à 11, comprenant un mécanisme (60) pour convertir l'entraînement rotatif depuis la boîte de vitesses (40) en entraînement linéaire pour déplacer la soupape (30).

13. Appareil selon l'une quelconque des revendications 9 à 12, dans lequel l'actionneur sous-marin est un premier actionneur sous-marin (120a), l'appareil comprenant en outre un second actionneur sous-marin (120b) selon l'une quelconque des revendications 1 à 8, et dans lequel la soupape (30) est une soupape à tiroir commandable par les premier et second actionneurs pour se déplacer dans une position fermée ; et dans lequel la soupape à tiroir (30) est mobile dans la position fermée en déplaçant une paire de vérins (135a, 135b) vers l'extérieur l'un par rapport à l'autre.

14. Procédé d'actionnement électrique sous-marin utilisant l'actionneur électrique sous-marin (20, 120) selon l'une quelconque des revendications 1 à 8 ou l'appareil selon l'une quelconque des revendications 9 à 13 ; le procédé comprenant :
la fourniture de l'actionneur électrique sous-marin (20, 120) sous la mer ;
l'alimentation électrique de l'actionneur électrique sous-marin (20, 120) ; et
l'utilisation de l'actionneur électrique sous-marin (20, 120) pour commander une soupape (30) afin de commander la production à partir d'un puits.
